# EUROPÄISCHE PATENTSCHRIFT

(11) **EP 3 457 095 B1**
(45) Veröffentlichungstag und Bekanntmachung des Hinweises auf die Patenterteilung: **06.11.2019**
(21) Anmeldenummer: 17191220.7
(22) Anmeldetag: 15.09.2017
(51) Int. Cl.: G01F 23/26, G01F 23/00

(54) **KAPAZITIVER FÜLLSTANDSENSOR UND VERFAHREN ZUR MESSUNG DES FÜLLSTANDS EINES MEDIUMS**
CAPACITIVE LEVEL SENSOR AND METHOD FOR MEASURING THE FILLING LEVEL OF A MEDIUM
CAPTEUR DE NIVEAU CAPACITIF ET PROCÉDÉ DE MESURE DU NIVEAU DE REMPLISSAGE D'UN MILIEU

(43) Veröffentlichungstag der Anmeldung: 20.03.2019
(73) Patentinhaber: Sick AG, 79183 Waldkirch (DE)
(72) Erfinder: IHLE, Marc, 76149 Karlsruhe (DE)

(56) Entgegenhaltungen:
- EP-A1- 2 489 996
- EP-A1- 2 657 663
- DE-A1- 3 026 342
- US-B1- 6 490 920

## Beschreibung

Die Erfindung betrifft einen kapazitiven Füllstandsensor und ein Verfahren zur kapazitiven Messung des Füllstands eines Mediums in einem Behälter nach dem Oberbegriff von Anspruch 1 beziehungsweise 13.

Ein bekanntes Prinzip zur Bestimmung von Füllständen in einem Behälter basiert auf Kapazitätsmessung. Dazu wird eine Sonde in den Behälter eingeführt und die Kapazität zwischen der Sonde und einem Bezug gemessen. Diese Kapazität wird durch die dielektrischen Eigenschaften des Mediums je nach Füllstand verändert. Unter Berücksichtigung der Dielektrizitätskonstante des Mediums wird aus der gemessenen Kapazität der Füllstand berechnet. Als Gegenelektrode üblicherweise auf Massepotential fungieren ein metallischer Behälter, eine eingebrachte Metallfläche, zusätzliche Elektroden auf der Sonde oder eine zweite Sonde.

Die gemessene Kapazität hängt aber nicht nur vom Füllstand ab, sondern auch von parasitären Komponenten, insbesondere dem Träger, auf dem die Elektroden aufgebracht sind. Die Umgebungsbedingungen, welche die parasitären Komponenten beeinflussen, sind teilweise hoch variabel, wie im Beispiel einer schnell in einen Tank einlaufenden heißen Flüssigkeit, wo sich die Sonde unten rasch erwärmt und oben zunächst kühl bleibt. Ein weiterer dynamischer Einfluss entsteht durch die sogenannte Permeation, nämlich das Eindiffundieren von Feuchtigkeit in die Sonde und dadurch unterschiedliche Feuchtigkeitsgrade der Sonde. Die Messung der Kapazität und in Folge des Füllstands wird durch solche Effekte stark verfälscht.

Aus der EP 2 657 663 A1 ist ein kapazitiver Füllstandsensor bekannt, dessen Sonde in einer Längsrichtung mehrere aufeinanderfolgende Segmente mit Messelektroden aufweist. Zur Kalibrierung ist vorgesehen, Grundkapazitäten der Segmente zu messen, wenn diese nicht in das Medium eingetaucht sind. Kalibrierung und Füllstandmessung können folglich nur zu unterschiedlichen Zeitpunkten stattfinden, so dass die Reaktion auf dynamische Änderungen der Umgebung träge und ungenau bleiben muss. Eine Ausführungsform der EP 2 657 663 A1 sieht außerdem einen Temperatursensor vor, mit dem die Temperatur gemessen wird, um die Kapazitäten mittels einer hinterlegten Kennlinie zu korrigieren. Das erfordert Einlernaufwand für die Bestimmung der Kennlinie, und außerdem bleiben lokale Temperaturunterschiede längs der Sonde unberücksichtigt.

Die US 6,539,797 B2 beschreibt einen kapazitiven Füllstandsensor, der zumindest eine untere Elektrode für eine Referenzmessung innerhalb des Mediums, eine obere Elektrode für eine Referenzmessung außerhalb des Mediums sowie eine mittlere eigentliche Messelektrode zur Bestimmung der vom Füllstand des Mediums abhängigen Kapazität aufweist. Mit solchen Referenzelektroden lässt sich aber gerade nicht feststellen, welche die Kapazität verändernden Einflüsse auf die mittlere eigentliche Messelektrode einwirken.

Aus der US 6 490 920 B1 ist ein kapazitiver Füllstandsensor mit Elektrodenformen bekannt, mit denen zwei Kapazitätsmessungen ermöglicht sind, die in unterschiedlicher Weise mit dem Füllstand variieren. Dadurch wird eine kompensierte Messung ermöglicht, die von den elektrischen Eigenschaften des zu vermessenden Mediums unabhängig ist. Es werden außerdem Kompensationskapazitäten beschrieben, die von Kontakt mit der Flüssigkeit geschützt werden und nur die Kapazität des Substrats messen, um dessen temperaturabhängigen Anteil an den gemessenen Kapazitätswerten zu kompensieren.

Aus der EP 2 489 996 A1 ist ein Haushaltsgerät mit Wasserstandssensor bekannt, der als kapazitiver Füllstandsensor ausgebildet ist. Dabei kann eine Referenzelektrode zur Kompensation von Umwelteinflüssen vorgesehen sein, deren Kapazität unabhängig vom Füllstand ist und die dafür vorzugsweise an einem Ort eingesetzt ist, an dem sich nicht in die Nähe des eingesetzten Tanks kommt.

Vor diesem Hintergrund ist Aufgabe der Erfindung, die Messung mit einem kapazitiven Füllstandsensor zu verbessern.

Diese Aufgabe wird durch einen kapazitiven Füllstandsensor und ein Verfahren zur kapazitiven Messung des Füllstands eines Mediums nach Anspruch 1 beziehungsweise 12 gelöst. Der Füllstandsensor weist eine in das Medium eintauchende Sonde mit mindestens einer Messelektrode für eine Kapazitätsmessung auf, aus der ein Füllstand berechnet wird. Dabei wird die Kapazität zwischen Messelektrode und einem Bezug gemessen, wie einer Behälterwand, oder zwischen mehreren Messelektroden der Sonde.

Die Erfindung geht von dem Grundgedanken aus, zur Kompensation von Umgebungseinflüssen auf die Sonde eine Kapazität füllstandunabhängig zu messen. Denn die Kapazität an der Messelektrode ändert sich nicht nur mit dem Füllstand, sondern auch mit der Suszeptibilität beziehungsweise der Dielektrizitätskonstanten der Sonde selbst, beispielsweise eines Trägers, auf dem die Messelektroden angebracht sind. Beispiele wichtiger Einflussgrößen sind hier Temperatur und durch Permeation entstehende Feuchtigkeit der Sonde. Die Sonde weist nun zusätzlich zu der Messelektrode mindestens eine Referenzelektrode auf, die so angeordnet ist, dass ihr Messergebnis nicht vom Füllstand abhängt. Das elektrische Feld zwischen Referenzelektrode und deren Bezug, beispielsweise einer Abschirmung der Sonde oder einer weiteren Bezugselektrode, durchdringt also aufgrund der Position der Referenzelektrode und/oder von Abschirmungen das Medium nicht oder allenfalls in vernachlässigbarer Weise. Über eine Kapazitätsmessung der Referenzelektrode wird nur der füllstandunabhängige Anteil der Kapazitätsänderungen gemessen, um damit die eigentliche Kapazitätsmessung an der Messelektrode zu kompensieren.

Die Erfindung hat den Vorteil, dass eine Verfälschung der Messergebnisse durch Umgebungseinflüsse, wie Temperatur und Feuchtigkeit, kompensiert und so unabhängig von Temperatur-, Feuchte- und Materialschwankungen eine genaue Erfassung des Füllstands möglich wird. Eine Einlernphase oder Beschränkung auf enge Temperatur-, Feuchtigkeits- oder Materialgrenzwerte ist nicht mehr erforderlich.

Die Mess- und Auswertungseinheit ist bevorzugt dafür ausgebildet, über die Referenzelektrode gemessene Veränderungen der Kapazität durch Umgebungseinflüsse bei der Kapazitätsmessung an der Messelektrode abzuziehen. Die über die Referenzelektrode gemessenen Kapazitätsänderungen sind gerade der Anteil der Variabilität, der durch Nebeneinflüsse wie Temperatur und Feuchtigkeit verursacht ist. Die Messelektrode bestimmt eine Kapazität, die sich durch eine Überlagerung von solchen Nebeneinflüssen und den gesuchten Änderungen des Füllstands ergibt. Daher wird durch Subtraktion insgesamt ein genaueres Messergebnis erzielt.

Messelektrode und Referenzelektrode sind bevorzugt derart miteinander verschaltet, dass eine Kapazitätsmessung bereits eine um Umgebungseinflüsse kompensierte Kapazität bestimmt. Beispielsweise wird das Signal der Referenzelektrode direkt von demjenigen der Messelektrode abgezogen, so dass nur noch das füllstandabhängige Messsignal ohne störende Umgebungseinflüsse verbleibt. Die Kompensation findet hier also direkt bei der Messung statt, nicht wie in anderen Ausführungsformen durch Auswertung der beiden Kapazitätsmessungen an Mess- und Referenzelektrode, wobei eine Kombination aus direkter Kompensation in der Elektrodenschaltung und der Auswertung auch denkbar ist. Für eine kompensierende Verschaltung von Mess- und Referenzelektrode sollte vorzugsweise deren Geometrie aufeinander abgestimmt sein.

Die Referenzelektrode ist erfindungsgemäß im Inneren der Sonde angeordnet. Das ist eine besonders geeignete Position, in der sichergestellt ist, dass die Referenzelektrode tatsächlich die Einflüsse misst, denen auch die Messelektrode ausgesetzt ist, zugleich aber das Feld an der Referenzelektrode nicht durch das Medium beeinflusst wird. Damit wird füllstandunabhängig genau die passende Referenz gemessen. Die Sonde kann eine Schirmschicht zwischen äußerer Messelektrode und innerer Referenzelektrode aufweisen. Eine solche Schirmschicht nach innen hat ohnehin Vorteile für die Messung, und außerdem unterstützt sie, dass die Messung mittels der Referenzelektrode füllstandunabhängig ist.

Die Sonde weist bevorzugt einen Träger auf, an dem Messelektrode und Referenzelektrode angebracht sind, insbesondere Messelektrode auf einer Vorderseite und Referenzelektrode auf einer Rückseite des Trägers. Das ergibt eine einfache, leicht herzustellende Sonde, bei der das Medium nur die Kapazitätsmessung an der Messelektrode beeinflusst. Eine Schirmschicht des Trägers kann zwischen Messelektrode und Referenzelektrode vorgesehen sein.

Der Träger weist bevorzugt zwischen Messelektroden weniger Material auf. Es wird dafür Trägermaterial weggenommen, indem es ausgedünnt wird oder Öffnungen angebracht werden. Das Trägermaterial zwischen Messelektroden wirkt als Dielektrikum, das den Umgebungseinflüssen ausgesetzt ist. Deshalb werden mit weniger Trägermaterial im Zwischenbereich die Schwankungen durch Umgebungseinflüsse minimiert. Über die Referenzelektrode muss dann weniger kompensiert werden. Es ist denkbar, den Träger wegzulassen und stattdessen metallische Teile als Passivierung zu beschichten.

Der Träger weist bevorzugt Öffnungen für einen verbesserten Klimaausgleich ins Innere der Sonde auf. Das ist besonders dann vorteilhaft, wenn die Referenzelektrode im Inneren angeordnet ist. Ohne raschen Klimaausgleich kann es sonst zu Verzögerungen kommen, währenddessen die Referenzelektrode einer anderen Feuchtigkeit und Temperatur ausgesetzt ist als die Messelektrode. Die Öffnungen sorgen also über den verbesserten Klimaausgleich für bessere Referenzmessdaten. Das ist vor allem bei hochdynamischen Vorgängen nützlich, etwa bei einem Temperaturschock oder dem schnellen Einfüllen einer heißen, dampfenden Flüssigkeit.

Der Träger weist bevorzugt eine flexible Leiterplatte auf, welche zu einer gewünschten Form der Sonde verformt, insbesondere rohrförmig gerollt ist. Auf einer flexiblen Leiterplatte oder Flexplatine können Elektrodenstrukturen sehr einfach und kostengünstig in praktisch jedem gewünschten Design angeordnet werden. So entsteht eine kostengünstige Sonde samt Elektroden. Vorzugsweise befindet sich die Referenzelektrode auf der Rückseite, so dass sie nach dem Zusammenrollen innen in der Sonde liegt.

Die Sonde weist erfindungsgemäß ein Rohr, bevorzugt aus nichtleitendem Material, auf, insbesondere ein Kunststoffrohr. Das Rohr dient als Hülle, damit die Elektroden dem Medium nicht direkt ausgesetzt sind. Außerdem wird die Sonde mechanisch stabilisiert, gerade im Falle eines Trägers in Form einer flexiblen Leiterplatte. Das Rohr kann aber auch selbst als Träger für die daran angebrachten Elektroden dienen. Vorzugsweise wird das Rohr unten verschlossen und abgedichtet, damit das Medium nicht eindringen kann und die Messung über die Referenzelektrode unabhängig vom Füllstand bleibt.

Die Sonde weist bevorzugt in ihrem Innenraum einen sich über ihre Längsausdehnung erstreckenden Belüftungskanal auf. Zwar ist die Permeation in gewisser Weise sogar erwünscht, damit eine Referenzelektrode im Inneren der Sonde zumindest annähernd derselben Feuchtigkeit und Temperatur ausgesetzt ist wie die Messelektrode. Die Feuchtigkeit kann aber zu einer Schadgasatmosphäre in der Sonde führen. Zum Ausgleich wird mit konstruktiven Maßnahmen wie dem Belüftungskanal ähnlich einem Kamin für eine ausreichende Belüftung gesorgt.

Die Sonde weist erfindungsgemäß in einer Längsrichtung mehrere aufeinanderfolgende Segmente auf, die jeweils mindestens eine Messelektrode und mindestens eine Referenzelektrode aufweisen. Eine solche segmentierte Sonde liefert deutlich mehr Messwerte für eine genauere Füllstandbestimmung. Vorzugsweise sind in jedem Segment mehrere Messelektroden angeordnet, zwischen denen die Kapazität bestimmt wird. Ein äußerer Bezug für nur eine einzige Messelektrode je Segment, wie eine metallische Behälterwand, ist aber nicht ausgeschlossen. Es ist vorteilhaft, eine Referenzelektrode in jedem Segment vorzusehen, damit als Referenz eine für die jeweilige Messelektrode des Segments vergleichbare Kapazität bestimmt wird.

Die Referenzelektrode weist bevorzugt eine in Längsrichtung der Sonde langgestreckte Form auf. Die Referenzelektrode ist entsprechend in Umfangsrichtung der Sonde schmal und damit insgesamt noch recht klein und handhabbar, beispielsweise in Form eines Rechtecks, welches die Sonde oder ein Segment der Sonde in Längsrichtung im Wesentlichen überdeckt. Die Geometrie der Referenzelektrode entspricht vorzugsweise einer Messelektrode oder ist darauf optimiert.

Die Referenzelektrode weist bevorzugt eine Mäander-Struktur oder eine Kammstruktur auf. Damit wird bei kleiner Fläche eine sehr große Länge erzielt. Diese Referenzelektrode erfasst Informationen über die Auswirkungen von Umgebungseinflüssen in einem größeren Bereich, der vorzugsweise zumindest annähernd dem Bereich entspricht, der auch die Messelektrode beeinflusst. Mit einer mäandrierenden Referenzelektrode können insbesondere gute Referenzwerte für mehrere Messelektroden bestimmt werden, zwischen denen eine Kapazität für eine Füllstandmessung gemessen wird.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittansicht eines in einen Behälter eingesetzten Füllstandsensors;
- Fig. 2: eine Draufsicht auf eine Elektrodenstruktur einer Sonde für einen Füllstandsensor;
- Fig. 3: eine Darstellung einer beispielhaften Verschaltung von Elektroden in einem Segment einer Sonde;
- Fig. 4: eine Darstellung eines Messelektrodenpaares zur Erläuterung einer Minimierung von Trägermaterial, um die Kapazitätsmessung möglichst wenig zu verfälschen; und
- Fig. 5: eine Darstellung von Referenzelektroden mit Kamm- oder Mäanderstuktur.

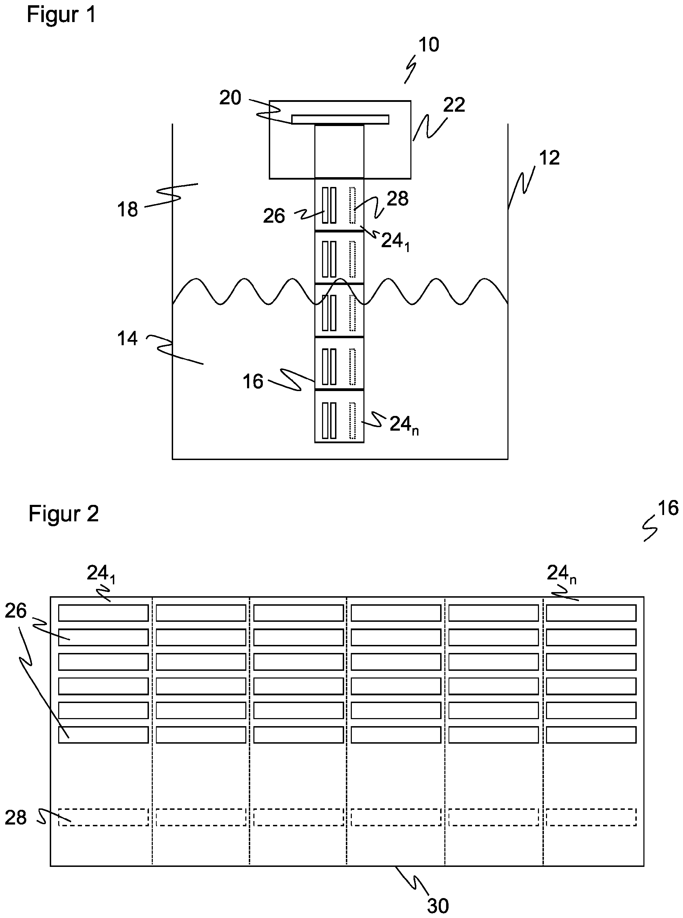

Figur 1 zeigt schematisch in einer Seitenansicht einen kapazitiven Füllstandsensor 10, der in einem Tank oder Behälter 12 mit einem Medium 14 angebracht ist. Ein Behälter 12 ist ganz allgemein als das das Medium 14 umgebender Grenzbereich zu verstehen, beispielsweise kann mit dem Füllstandsensor 10 auch der Wasserstand in einem See gemessen werden. Eine Sonde 16 ragt in das Medium 14 hinein, vorzugsweise bis zum Boden des Behälters 12, um den Füllstand des Mediums 14 zu bestimmen. Prinzipiell es auch möglich, die Sonde 16 von unten in den Behälter 12 einzubauen, wobei dann die Auswertungen entsprechend umzukehren sind.

Aufgrund der unterschiedlichen dielektrischen Eigenschaften des Mediums 14 gegenüber dem darüber befindlichen Medium, üblicherweise Luft 18, ändern sich die kapazitiven Eigenschaften der Sonde 16 in Abhängigkeit von dem Füllstand. Dies kann über Kapazitätsmessungen durch eine Mess- und Auswerteeinheit 20 in einem Sensorkopf 22 des Füllstandsensors 10 gemessen werden. Somit ist der Füllstandsensor 10 in der Lage, einen Messwert für die Füllhöhe des Mediums 14 in dem Behälter 12 und bei bekannter Behältergeometrie auch für das Volumen an vorhandenem Medium 14 auszugeben. Bei dem Medium 14 kann es sich beispielsweise um eine beliebige Flüssigkeit, wie Kühl- und Schmierstoffe, Hydrauliköle, Reinigungsmittel, Laborchemikalien oder Nasschemie in Fertigungsstrecken, aber auch um Schüttgut oder Granulate handeln.

Die Sonde 16 ist in ihrer Längserstreckung, also in Figur 1 in vertikaler Richtung, in eine Vielzahl von Segmenten 24₁-24ₙ unterteilt. In einer anderen Ausführungsform ist die Sonde 16 nicht segmentiert, gleichbedeutend damit, dass es nur ein Segment 24₁ gibt. Jedes Segment 24₁-24ₙ weist mindestens eine Messelektrode 26 auf, im dargestellten Beispiel ein Paar von Messelektroden 26. Je nach Ausführungsform wird von der Mess- und Auswertungseinheit 20 zwischen Messelektroden 26, zwischen Gruppen von Messelektroden 26 oder zwischen mindestens einer Messelektrode 26 und einem äußeren Bezug, wie einer nicht dargestellten weiteren Sonde oder der Wand des Behälters 12, eine Kapazität gemessen.

Eine Kapazitätsmessung erfolgt beispielsweise dadurch, dass an die jeweilige Messelektrode 26 oder Messelektroden 26 eine Wechselspannung angelegt wird, insbesondere pulsähnlich ein An-Aus-Muster, um kapazitive Lade- und Entladevorgänge auszulösen. Die Kapazität wird über eine Messung des dabei fließenden elektrischen Stroms bestimmt. Eine solche Kapazitätsmessung ist an sich bekannt. Beispielsweise aus dem Bereich der Touchscreen-Steuerung sind auch integrierte Schaltkreise oder Chips verfügbar, die Kapazitätsmessungen mit vielen Kanälen für wählbare Elektroden oder Elektrodenpaare durchführen.

Die zu messende Kapazität ist einerseits vom Füllstand des Mediums 14 abhängig. Dabei sollte deren Suszeptibilität oder Dielektrizitätskonstante bekannt oder zuvor vermessen worden sein. Es gibt auch Messverfahren, die Füllstand und Dielektrizitätskonstante gemeinsam bestimmen beziehungsweise die Abhängigkeit von letzterer implizit berücksichtigen.

Andererseits besteht aber für die zu messende Kapazität auch eine Abhängigkeit von Eigenschaften der Sonde 16 und der Umgebung, insbesondere von Materialeigenschaften eines Trägers der Sonde 16, an dem die Messelektroden 26 angeordnet sind sowie der Temperatur und der Feuchtigkeit. Dadurch verändert sich die Suszeptibilität der Sonde, und das Messergebnis des Füllstands wird verfälscht.

Aus diesem Grund sind zusätzlich zu den Messelektroden 26 auf der Sonde 16 Referenzelektroden 28 vorgesehen. Dargestellt ist ein bevorzugtes Beispiel mit je einer Referenzelektrode 28 pro Segment. Es ist alternativ denkbar, Referenzmessungen eines Segments auf andere Segmente zu übertragen, wenn die dadurch entstehenden Fehler in Kauf genommen werden, und so mit weniger Referenzelektroden 28 auszukommen. Umgekehrt kann anstelle einer Referenzelektrode 28 je Segment auch ein Paar von Referenzelektroden 28 oder eine noch komplexere Anordnung verwendet werden.

Die Referenzelektroden 28 befinden sich im Inneren der Sonde 16 und sind deshalb mit gestrichelten Linien dargestellt. Eine Kapazitätsmessung mittels der Referenzelektroden 28 ist daher unabhängig vom Füllstand des Mediums 14. Die Referenzelektroden 28 reagieren aber in gleicher Weise wie die Messelektroden 26 auf Veränderungen der kapazitiven Eigenschaften der Sonde 16 selbst, einschließlich Veränderungen der Temperatur und der Feuchtigkeit. Deshalb lässt sich anhand der über die Referenzelektroden 28 gemessenen Kapazität die Temperatur- und Feuchtigkeitsabhängigkeit der Kapazitätsmessung an den Messelektroden 26 kompensieren. Dies kann in der Mess- und Auswertungseinheit 20 geschehen, indem Änderungen der Kapazität der Referenzmessung von der eigentlichen Messung abgezogen werden, die somit nur noch durch den gesuchten Füllstand beeinflusst ist. Alternativ oder zusätzlich ist auch denkbar, die Messelektroden 26 und Referenzelektroden 28 so zu verschalten, dass die Temperatur- und Feuchtigkeitseinflüsse direkt kompensiert werden, also eine nur noch vom Füllstand abhängige Kapazität gemessen wird.

Figur 2 zeigt eine Draufsicht auf eine Ausführungsform einer Elektrodenstruktur der Sonde 16. Die Elektroden 26, 28 werden in dieser Ausführungsform auf eine flexible Leiterplatte 30 aufgebracht, die anschließend zu der Sonde 16 gerollt wird. Zusätzlich wird die gerollte Leiterkarte 30 dann vorzugsweise noch von einem schützenden und stabilisierenden Rohr aus nichtleitendem Material umgeben, das hier vereinfachend als Kunststoffrohr bezeichnet und unten abgedichtet ist, damit das Medium 14 nicht eindringt. In einer anderen Ausführungsform werden die Elektroden 26, 28 auf einen anderen Träger aufgebracht als die Leiterplatte 30, und für diesen Fall kann Figur 2 als aufgeschnittene Ansicht des Trägers angesehen werden.

Die Darstellung der Sonde 16 in Figur 2 ist gegenüber der Figur 1 um 90° gedreht. Die Längserstreckung der Sonde 16, die in der üblichen Anwendung wie in Figur 1 vertikal in einen Behälter 12 eingetaucht wird, liegt somit in Figur 2 horizontal. In dieser Längserstreckung sind erneut die Segmente 24₁-24ₙ zu erkennen. Die Messelektroden 26 erstrecken sich jeweils vollständig über ein Segment 24₁-24ₙ, wobei ein gewisser Abstand zur elektrischen Entkopplung gegenüber dem nächsten Segments 24₁-24ₙ gewahrt bleibt.

In Querrichtung senkrecht zu der Längsrichtung, also der Umfangsrichtung der Sonde 16, liegen die Messelektroden 26 nebeneinander. Dabei ist die dargestellte Rechteckform der Messelektroden 26 wegen der einfachen Geometrie zwar bevorzugt, aber nicht zwingend erforderlich. Auch die Anzahl und gegenseitigen Abstände der Messelektroden 26 sind beispielhaft.

Die flexible Leiterplatte 30 besteht nach üblichen Herstellungsverfahren aus mehreren Schichten von unterschiedlichen Materialien. Diese weisen zueinander unterschiedliche Suszeptibilitäten in Abhängigkeit von Feuchtigkeit und Temperatur auf. Dabei nehmen die verschiedenen Schichten Feuchtigkeitsänderungen und Temperaturänderungen unterschiedlich schnell auf. Auch ist die maximale Feuchtigkeitsaufnahme der Schichten unterschiedlich.

Die an den Messelektroden 26 gemessene Kapazität hängt nicht nur vom Füllstand des Mediums 14, sondern auch von dieser variablen Suszeptibilität der flexiblen Leiterplatte 30 ab. Um dies zu kompensieren, sind die schon zu Figur 1 eingeführten Referenzelektroden 28 vorgesehen, die erneut gestrichelt gezeichnet sind, weil sie auf der Rückseite der flexiblen Leiterplatte 30 liegen.

Die flexible Leiterplatte 30 wird vorzugsweise doppelt gerollt, so dass der Bereich der Messelektroden 26 den Umfang der Sonde 16 dargestellt und die Referenzelektroden 28 sich nach dem Zusammenrollen auf der Rückseite der Messelektroden 26 befinden. Es können auch in Figur 2 nicht gezeigte Schirmelemente auf der flexiblen Leiterplatte 30 angeordnet werden, die nach dem Aufrollen eine Schirmschicht zwischen Messelektroden 26 und Referenzelektroden 28 bilden. Alternativ kann die Struktur auf der flexiblen Leiterplatte 30 auch anders gestaltet werden, so dass sich die Referenzelektroden 28 von vorneherein den Messelektroden 26 gegenüberliegend auf der Rückseite der flexiblen Leiterplatte 30 befinden.

Aufgrund der Anordnung der Referenzelektroden 28 im Inneren der Sonde 16, insbesondere wenn zwischen Messelektroden 26 und Referenzelektroden 28 noch eine Schirmschicht vorhanden ist, hängt die über die Referenzelektroden 28 gemessene Kapazität ausschließlich von der Suszeptibilität der flexiblen Leiterplatte 30 ab. Durch Verrechnung der gemessenen Kapazitätswerte über die Messelektroden 26 und die Referenzelektroden 28 wird ein korrigierter Kapazitätswert ermittelt, welcher unabhängig von der Suszeptibilität der flexiblen Leiterplatte 30 nur vom Füllstand des Mediums 14 bestimmt ist.

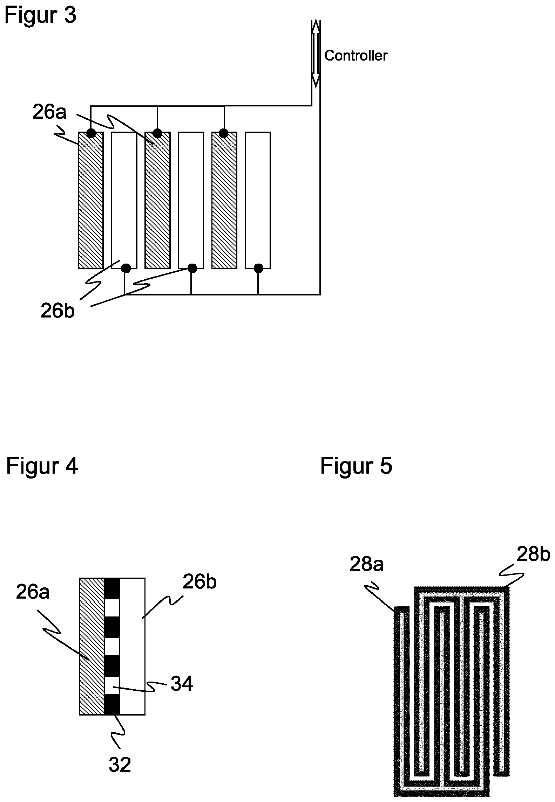

Figur 3 zeigt in einem Teilausschnitt die Messelektroden 26 eines einzelnen Segments 24₁-24ₙ. Kapazitäten werden jeweils zwischen zwei Messelektroden 26 oder Gruppen von Messelektroden 26 gemessen. Dazu können wie in diesem Beispiel je drei Messelektroden 26a-b alternierend zu einer gemeinsamen Elektrode verbunden sein, wie in Figur 3 durch unterschiedliche Schraffur und Verbindungen zu der Mess- und Auswerteeinheit 20 gezeigt. Das ist aber rein beispielhaft zu verstehen. Ebenso ist denkbar, dass mehrere Messungen zwischen jeweils benachbarten Messelektroden 26 stattfinden, oder eine oder mehrere Kapazitätsmessungen zwischen beliebigen anderen Kombinationen von Messelektroden 26 eines Segments 24₁-24ₙ. Auch die Messung einer Kapazität zwischen von einzelnen Messelektroden 26 oder Gruppen von Elektroden zu einem äußeren Bezug, wie Wand des Behälters 12, ist prinzipiell denkbar, auch wenn der Bezug auf der Sonde 16 selbst robuster und genauer ist.

Figur 4 zeigt schematisch ein Paar Messelektroden 26a-b. Die Kapazität dazwischen wird am stärksten durch die Suszeptibilität des im Zwischenraum befindlichen Materials bestimmt. Dieser Einfluss lässt sich deutlich reduzieren, wenn das Material im Zwischenraum ausgedünnt wird. Dazu können Öffnungen 32, etwa Löcher beziehungsweise einer oder mehrere Längsschlitze, in der flexiblen Leiterplatte 30 oder allgemein dem Träger zwischen den Messelektroden 26a-b angebracht werden. Wegen der mechanischen Stabilität sollten Stege 34 oder Unterbrechungen der Öffnungen 32 mit Material der flexiblen Leiterplatte 30 oder des Trägers verbleiben.

Öffnungen 32 in der flexiblen Leiterplatte 30 beziehungsweise dem Träger können noch eine weitere Funktion haben, nämlich ein Angleichen der Luftfeuchtigkeit zu beiden Seiten der flexiblen Leiterplatte 30. Dadurch sind Messelektroden 26 und Referenzelektroden 28 einer vergleichbaren Feuchtigkeit ausgesetzt, und die Referenzmessung wird genauer, unterliegt keiner unerwünschten Verzögerung. Für diese Ausgleichsfunktion können die Öffnungen 32 in Doppelfunktion dienen, oder es werden unterstützend oder alternativ Öffnungen an anderer Stelle angebracht.

Auf den ersten Blick erscheint es widersprüchlich, die unerwünschte Permeation auch noch künstlich zu unterstützen. Nun ist aber zum einen Feuchtigkeit, die an die Außenseite der flexiblen Leiterplatte 30 gelangt, ohnehin schon durch Permeation durch das schützende äußere Kunststoffrohr hindurchgedrungen, so dass es zu spät ist, die Sonde 16 davor zu schützen. Außerdem verbleibt vorzugsweise im Inneren der Sonde ein kaminartiger Belüftungskanal, über den die Feuchtigkeit nach oben und letztlich außen entweicht. Dazu muss die Feuchtigkeit aber zunächst ins Innere der Sonde 16 gelangen.

Figur 5 zeigt schematisch ein Paar Referenzelektroden 28a-b mit einer Kamm- oder Mäanderstruktur. In diesem Ausführungsbeispiel erfolgt also die Kapazitätsmessung für die Kompensation zwischen zwei Referenzelektroden 28a-b. Eine Messung über nur eine Referenzelektrode 28 gegen einen anderen Bezug ist mit einer analogen Geometrie ebenso denkbar. Durch die flächengreifende Mäanderstruktur wird der Einfluss der verschiedenen Schichten der flexiblen Leiterplatte 30 auf die Referenzelektrode 28 demjenigen auf die Messelektroden 26 ähnlicher, denn die Kapazitäten werden bei geeigneter geometrischer Auslegung der Mäanderstruktur über praktisch denselben Bereichen der flexiblen Leiterplatte 30 gemessen. Eine entsprechende Optimierung der Mäanderstruktur ist durch Wahl der Anzahl, Anordnung, Längen und Breiten der ineinandergreifenden Zungen möglich.

## Patentansprüche

1. Kapazitiver Füllstandsensor (10) zur Messung des Füllstands eines Mediums (14) in einem Behälter (12), mit einer Sonde (16) zum Eintauchen in das Medium (14), die mindestens eine Messelektrode (26) für eine Kapazitätsmessung aufweist, und mit einer Mess-und Auswertungseinheit (20), die dafür ausgebildet ist, eine Kapazität an der Messelektrode (26) zu bestimmen und daraus einen Füllstand zu berechnen, wobei die Sonde (16) mindestens eine Referenzelektrode (28) für eine füllstandunabhängige Kapazitätsmessung aufweist, um damit Umgebungseinflüsse auf die Kapazitätsmessung an der Messelektrode (26) zu kompensieren,
**dadurch gekennzeichnet, dass** die Sonde (16) rohrförmig und die Referenzelektrode (28) im Inneren der Sonde (16) angeordnet ist, und dass die Sonde (16) in einer Längsrichtung mehrere aufeinanderfolgende Segmente (24₁-24ₙ) aufweist, die jeweils mindestens eine Messelektrode (26) und mindestens eine Referenzelektrode (28) aufweisen.

2. Füllstandsensor (10) nach Anspruch 1,
wobei die Mess- und Auswertungseinheit (20) dafür ausgebildet ist, über die Referenzelektrode (28) gemessene Veränderungen der Kapazität durch Umgebungseinflüsse bei der Kapazitätsmessung an der Messelektrode (26) abzuziehen.

3. Füllstandsensor (10) nach Anspruch 1 oder 2,
wobei Messelektrode (26) und Referenzelektrode (28) derart miteinander verschaltet sind, dass eine Kapazitätsmessung bereits eine um Umgebungseinflüsse kompensierte Kapazität bestimmt.

4. Füllstandsensor (10) nach einem der vorhergehenden Ansprüche,
wobei die Sonde (16) einen Träger (30) aufweist, an dem Messelektrode (26) und Referenzelektrode (28) angebracht sind, insbesondere Messelektrode (26) auf einer Vorderseite und Referenzelektrode (28) auf einer Rückseite des Trägers (30).

5. Füllstandsensor (10) nach Anspruch 4,
wobei der Träger (30) zwischen Messelektroden (26) weniger Material aufweist, indem Trägermaterial ausgedünnt ist oder Öffnungen angebracht werden.

6. Füllstandsensor (10) nach Anspruch 4 oder 5,
wobei der Träger (30) Öffnungen für einen verbesserten Klimaausgleich ins Innere der Sonde (16) aufweist.

7. Füllstandsensor (10) nach einem der Ansprüche 4 bis 6,
wobei der Träger eine flexible Leiterplatte (30) aufweist, welche zu einer gewünschten Form der Sonde (16) verformt, insbesondere rohrförmig gerollt ist.

8. Füllstandsensor (10) nach einem der vorhergehenden Ansprüche,
wobei die Sonde (16) ein Rohr aus nichtleitendem Material aufweist.

9. Füllstandsensor (10) nach einem der vorhergehenden Ansprüche,
wobei die Sonde (16) in ihrem Innenraum einen sich über ihre Längsausdehnung erstreckenden Belüftungskanal aufweist.

10. Füllstandsensor (10) nach einem der vorhergehenden Ansprüche,
wobei die Referenzelektrode (28) eine in Längsrichtung der Sonde (16) langgestreckte Form aufweist.

11. Füllstandsensor (10) nach einem der vorhergehenden Ansprüche,
wobei die Referenzelektrode (28) eine Mäander-Struktur aufweist.

12. Verfahren zur kapazitiven Messung des Füllstands eines Mediums (14) in einem Behälter (12), bei dem die Kapazität an einer Messelektrode (26) einer in das Medium (14) eintauchenden Sonde (16) gemessen und daraus ein Füllstand berechnet wird, wobei eine Kapazität an einer Referenzelektrode (28) der Sonde (16) gemessen wird, die aufgrund der Positionierung der Referenzelektrode (28) füllstandunabhängig ist, und dass damit Umgebungseinflüsse auf die Kapazitätsmessung an der Messelektrode (26) kompensiert werden,
**dadurch gekennzeichnet dass** die Sonde (16) rohrförmig und die Referenzelektrode (28) im Inneren der Sonde (16) angeordnet ist, und dass die Sonde (16) in einer Längsrichtung mehrere aufeinanderfolgende Segmente (24₁-24ₙ) aufweist, die jeweils mindestens eine Messelektrode (26) und mindestens eine Referenzelektrode (28) aufweisen.

## Claims

1. A capacitive level sensor (10) for measuring the level of a medium (14) in a container (12) having a probe (16) for immersion into the medium (14) that has at least one measurement electrode (26) for a capacitance measurement and having a measurement and evaluation unit (20) configured to determine a capacitance at the measurement electrode (26) and to calculate a level from that, wherein the probe (16) has at least one reference electrode (28) for a capacitance measurement independent of the level to thus compensate environmental influences on the capacitance measurement at the measurement electrode (26),
**characterized in that** the probe (16) is tubular and the reference electrode (28) is arranged in the interior of the probe (16), and **in that** the probe (16) has a plurality of consecutive segments (24₁-24ₙ) in a longitudinal direction that each have at least one measurement electrode (26) and at least one reference electrode (28).

2. The capacitive level sensor (10) in accordance with claim 1,
wherein the measurement and evaluation unit (20) is configured to subtract changes of the capacitance measured via the reference electrode (28) due to environmental influences from the capacitance measurement at the measurement electrode (26).

3. The capacitive level sensor (10) in accordance with claim 1 or 2,
wherein the measurement electrode (26) and the reference electrode (28) are interconnected to one another such that a capacitance measurement already determines a capacitance compensated by environmental influences.

4. The capacitive level sensor (10) in accordance with any of the preceding claims,
wherein the probe (16) has a carrier (30) to which the measurement electrode (26) and the reference electrode (28) are attached, in particular the measurement electrode (26) on a front side and the reference electrode (28) on a rear side of the carrier (30).

5. The capacitive level sensor (10) in accordance with claim 4,
wherein the carrier (30) has less material between the measurement electrodes (26) in that carrier material is thinned out or openings are made.

6. The capacitive level sensor (10) in accordance with claim 4 or 5,
wherein the carrier (30) has openings for an improved climate balance in the interior of the probe (16).

7. The capacitive level sensor (10) in accordance with any of claims 4 to 6,
wherein the carrier has a flexible circuit board (30) that is shaped into a desired shape of the probe (16), in particular is rolled in tube shape.

8. The capacitive level sensor (10) in accordance with any of the preceding claims,
wherein the probe (16) has a tube of non-conductive material.

9. The capacitive level sensor (10) in accordance with any of the preceding claims,
wherein the probe (16) in its interior has a ventilation passage extending over its longitudinal extent.

10. The capacitive level sensor (10) in accordance with any of the preceding claims,
wherein the reference electrode (28) has an elongated shape in the longitudinal direction of the probe (16).

11. The capacitive level sensor (10) in accordance with any of the preceding claims,
wherein the reference electrode (28) has a meandering structure.

12. A method for the capacitive measurement of the level of a medium (14) in a container (12) in which the capacitance is measured at a measurement electrode (26) of a probe (16) immersed into the medium (14) and in which a level is calculated from that, wherein a capacitance is measured at a reference electrode (28) of the probe (16) that is independent of the level due to the positioning of the reference electrode (28), and wherein environmental influences on the capacitance measurement at the measurement electrode (26) are thus compensated,
**characterized in that** the probe (16) is tubular and the reference electrode (28) is arranged in the interior of the probe (16), and **in that** the probe (16) has a plurality of consecutive segments (24₁-24ₙ) in a longitudinal direction that each have at least one measurement electrode (26) and at least one reference electrode (28).

## Revendications

1. Capteur de niveau capacitif (10) pour mesurer le niveau d'un milieu (14) dans un réservoir (12) comportant une sonde (16) pour immersion dans le milieu (14) qui comporte au moins une électrode de mesure (26) pour une mesure de capacité et une unité de mesure et d'évaluation (20) configurée pour déterminer une capacité sur l'électrode de mesure (26) et pour calculer un niveau à partir de celle-ci, dans laquelle la sonde (16) présente au moins une électrode de référence (28) pour une mesure de capacité indépendante du niveau afin de compenser ainsi les influences de l'environnement sur la mesure de capacité au niveau de l'électrode de mesure (26),
**caractérisée en ce que** la sonde (16) est tubulaire et l'électrode de référence (28) est disposée à l'intérieur de la sonde (16), et que la sonde (16) présente plusieurs segments (24₁-24ₙ) consécutifs dans une direction longitudinale qui présentent chacun au moins une électrode de mesure (26) et au moins une électrode de référence (28).

2. Le capteur de niveau capacitif (10) selon la revendication 1,
dans lequel l'unité de mesure et d'évaluation (20) est configurée pour soustraire les variations de la capacité mesurée via l'électrode de référence (28) dues à des influences environnementales de la mesure de capacité sur l'électrode de mesure (26).

3. Le capteur de niveau capacitif (10) selon la revendication 1 ou 2,
dans lequel l'électrode de mesure (26) et l'électrode de référence (28) sont reliées l'une à l'autre de telle sorte qu'une mesure de capacité détermine déjà une capacité compensée par des influences environnementales.

4. Le capteur de niveau capacitif (10) selon l'une des revendications précédentes,
dans lequel la sonde (16) présente un support (30) auquel sont fixées l'électrode de mesure (26) et l'électrode de référence (28), en particulier l'électrode de mesure (26) sur une face avant et l'électrode de référence (28) sur une face arrière du support (30).

5. Le capteur de niveau capacitif (10) selon la revendication 4,
dans lequel le support (30) présente moins de matériau entre les électrodes de mesure (26), en ce que le matériau du support est dilué ou des ouvertures sont réalisées.

6. Le capteur de niveau capacitif (10) selon la revendication 4 ou 5,
dans lequel le support (30) présente des ouvertures pour un meilleur équilibre climatique à l'intérieur de la sonde (16).

7. Le capteur de niveau capacitif (10) selon l'une des revendications 4 à 6,
dans lequel le support présente une carte de circuit imprimé flexible (30) qui est conformée en une forme souhaitée de la sonde (16), et en particulier est roulée en forme de tube.

8. Le capteur de niveau capacitif (10) selon l'une des revendications précédentes,
dans lequel la sonde (16) présente un tube en matériau non conducteur.

9. Le capteur de niveau capacitif (10) selon l'une des revendications précédentes,
dans lequel la sonde (16) présente à l'intérieur un passage de ventilation s'étendant sur son extension longitudinale.

10. Le capteur de niveau capacitif (10) selon l'une des revendications précédentes,
dans lequel l'électrode de référence (28) présente une forme allongée dans la direction longitudinale de la sonde (16).

11. Le capteur de niveau capacitif (10) selon l'une des revendications précédentes,
dans lequel l'électrode de référence (28) présente une structure sinueuse.

12. Procédé de mesure capacitive du niveau d'un milieu (14) dans un réservoir (12) dans lequel la capacité est mesurée sur une électrode de mesure (26) d'une sonde (16) immergée dans le milieu (14) et dans lequel un niveau est calculé à partir de celui-ci, et une capacité étant mesurée sur une électrode de référence (28) de la sonde (16) qui est indépendante du niveau dû au positionnement de l'électrode de référence (28), et dans lequel les influences de l'environnement sur la mesure de capacité au niveau de l'électrode de mesure (26) sont ainsi compensées,
**caractérisé en ce que** la sonde (16) est tubulaire et l'électrode de référence (28) est disposée à l'intérieur de la sonde (16), et **en ce que** la sonde (16) présente plusieurs segments consécutifs (24₁-24ₙ) dans une direction longitudinale qui présentent chacun au moins une électrode de mesure (26) et au moins une électrode de référence (28).
